# FASCICULE DE BREVET EUROPEEN

(11) **EP 1 248 529 B1**
(45) Date de publication et mention de la délivrance du brevet: **05.01.2005**
(21) Numéro de dépôt: 01905857.7
(22) Date de dépôt: 16.01.2001
(51) Int. Cl.: A23J 3/26

(54) **PROCEDE ET INSTALLATION DE PREPARATION EN CONTINU DE CASEINATE**
VERFAHREN UND VORRICHTUNG ZUR KONTINUIERLICHEN HERSTELLUNG VON CASEINATEN
METHOD AND INSTALLATION FOR CONTINUOUSLY PREPARING CASEINATE

(30) Priorité: 18.01.2000 FR 0000604
(43) Date de publication de la demande: 16.10.2002
(73) Titulaire: CLEXTRAL, F-42700 Firminy (FR)
(72) Inventeur: ASENSIO, Luis, F-42290 Sorbiers (FR); BOUVIER, Jean-Marie, F-42000 Saint-Etienne (FR); BRUYAS, Laurent, F-43330 Pont Salomon (FR); DURAND, Daniel, F-42500 Le Chambon Feugerolles (FR)
(74) Mandataire: Jacobson, Claude
(86) Numéro de dépôt international: PCT/FR2001/000133
(87) Numéro de publication internationale: WO 2001/052666

(56) Documents cités:
- EP-A- 0 340 396
- FR-A- 2 459 005
- GB-A- 1 433 842
- GB-A- 2 148 902
- US-A- 4 839 193
- FICHTALI J ET AL: "PILOT PLANT PRODUCTION OF CASEINS USING EXTRUSION PROCESSING. \II. SODIUM CASEINATE PRODUCTION" MILCHWISSENSCHAFT,DE,VV GMBH VOLKSWIRTSCHAFTLICHER VERLAG. MUNCHEN, vol. 46, no. 8, 1991, pages 479-483, XP000226136 ISSN: 0026-3788
- SZPENDOWSKI J ET AL: "THE EFFECT OF EXTRUSION ON THE BIOLOGICAL VALUE OF CASEINATES" MILCHWISSENSCHAFT,DE,VV GMBH VOLKSWIRTSCHAFTLICHER VERLAG. MUNCHEN, vol. 49, no. 5, 1994, pages 260-263, XP000454659 ISSN: 0026-3788
- WAGNER ET AL.: "Making caseinate by extruder" FOOD ENGINEERING INTERNATIONAL, vol. 14, no. 2, 1989, pages 42-45, XP000957814

## Description

La présente invention concerne un procédé et une installation de préparation en continu de caséinate à partir de caséine formée par des protéines de lait en poudre non soluble.

On sait que le lait sert de matière première à la fabrication de différents produits utilisables dans l'industrie chimique ou alimentaire.

En particulier, il est connu d'extraire par précipitation de la caséine qui est transformée par exemple en gélifiant utilisable notamment pour la fabrication de potage, d'entremet, de glace, de yaourt ou de produits de charcuterie ou bien dans d'autres industries non alimentaires.

Cependant, pour être utilisable, la caséine doit auparavant être transformée en caséinate soluble.

Pour cela, le caséinate est fabriqué à partir de la caséine, c'est à dire de protéines du lait qui subissent une transformation chimique pour lui permettre d'absorber l'eau.

Il existe différentes catégories de caséinate dont le caséinate de sodium et le caséinate de calcium. Le caséinate de sodium est le résultat du mélange de caséine, de soude et d'eau et le caséinate de calcium est le résultat du mélange de caséine, d'ammoniaque, d'hydroxyde de calcium et d'eau, éventuellement, en plus, de l'ammoniac.

Jusqu'à présent, la réaction chimique est réalisée dans un réacteur en présence d'une grande quantité d'eau et après, plusieurs minutes, on obtient un caséinate qui doit ensuite être séché pour l'obtention d'une poudre présentant une solubilité peu performante.

Les installa.tions de fabrication de caséinate utilisées jusqu'à présent sont donc encombrantes et nécessitent de grands réacteurs et de grands séchoirs et ces installations consomment une grande quantité d'eau et d'énergie.

De plus, les installations utilisées jusqu'à présent nécessitent de nombreuses opérations de manipulation entre les différents postes de travail. EP-A-0 340 396 divulgue un procédé et une installation pour la préparation de caséinate comprenant l'introduction de caséine et de réactif alcalin, une augmentation de la pression et de la température, de malaxage directement avant la sortie de l'extrudeur et d'extrusion.

L'invention a pour but de proposer un procédé et une installation de préparation en continu de caséinate, sans rupture de charge dans la ligne de fabrication et permettant d'obtenir un caséinate présentant une excellente solubilité et une grande neutralité chimique, tout en réduisant la consommation d'énergie et les différentes opérations de manipulation nécessaires pour obtenir ce type de produit.

L'invention a donc pour objet un procédé de préparation en continu de caséinate, caractérisé en ce que :
- on introduit en continu des protéines de lait en poudre non soluble dans une machine d'extrusion à deux vis co-rotatives et co-pénétrantes, entraînées en rotation autour d'axes parallèles à l'intérieur d'un fourreau de forme allongée,
- on effectue dans le fourreau de la machine d'extrusion une première étape de transport de la poudre de protéines de lait avec introduction dans le fourreau à la fin de cette première étape, d'eau et d'un réactif alcalin,
- on soumet le mélange formé par les protéines de lait, l'eau et le réactif alcalin à un premier malaxage intense sous pression avec élévation de la température du mélange pour amorcer la réaction chimique entre les protéines de lait et le réactif alcalin,
- on effectue dans le fourreau une deuxième étape de transport du mélange au cours de laquelle se poursuit la réaction chimique et l'élévation de la température de ce mélange,
- on soumet le mélange à un deuxième malaxage sous pression et à un cisaillement intenses pour compléter la réaction chimique, avec augmentation de la température du mélange, pour réaliser la fusion de ce mélange et obtenir une pâte visqueuse de caséinate,
- on effectue une troisième étape de transport et de refroidissement de la pâte de caséinate avec au début de cette étape une opération de dégazage pour diminuer et ajuster la température et la viscosité de la pâte de caséinate,
- on soumet 1a pâte de caséinate à un dernier malaxage et à un échange thermique avec refroidissement de ladite pâte,
- on effectue une quatrième étape de transport et d'échange thermique avec refroidissement pour maintenir la pâte de caséinate à une température comprise entre 70 et 95°C,
- on extrude la pâte de caséinate à ladite température et avec un taux d'humidité compris entre 30 et 40% pour former à la sortie de la machine d'extrusion un boudin continu de pâte de caséinate,
- on forme à partir du boudin une plaque continue d'une faible épaisseur de pâte de caséinate et simultanément on refroidit ladite pâte de caséinate à une température inférieure à 20°C,
- on découpe longitudinalement la plaque en plusieurs bandes parallèles,
- et on découpe transversalement lesdites bandes en morceaux de caséinate de faibles dimensions.

L'invention a également pour objet une installation de préparation en continu de caséinate, caractérisée en ce qu'elle comprend :
- une machine d'extrusion formée de deux vis co-rotatives et co-pénétrantes, entraînées en rotation autour d'axes parallèles à l'intérieur d'un fourreau de forme allongée muni d'alésages sécants et déterminant successivement de l'amont à l'aval :
   . une première zone d'introduction en continu dans le fourreau de protéines de lait en poudre non soluble et de transport de ces protéines de lait,
   . une zone de transport de la poudre de protéines de lait avec introduction d'eau et d'un réactif alcalin dans le fourreau à la fin de cette zone,
   . une première zone de malaxage intense sous pression du mélange formé par les protéines de lait, l'eau et le réactif,alcalin avec élévation de la température du mélange pour amorcer la réaction chimique entre les protéines de lait et le réactif alcalin,
   . une zone de transport du mélange dans laquelle se poursuit la réaction chimique et l'augmentation de la température de ce mélange,
   . une deuxième zone de malaxage sous pression et de cisaillement intense du mélange complétant la réaction chimique avec augmentation de la température de ce mélange pour réaliser la fusion dudit mélange et obtenir une pâte visqueuse de caséinate,
   . une zone de transport et de refroidissement de la pâte de caséinate avec, au début de cette zone, un orifice de dégazage ménagé dans le fourreau et débouchant dans lesdits alésages sécants pour diminuer et ajuster la température et la viscosité de cette pâte de caséinate,
   . une troisième zone de malaxage et d'échange thermique avec refroidissement de ladite pâte,
   . une zone de transport et d'échange thermique avec refroidissement pour maintenir la pâte de caséinate à une température comprise ente 70 et 95°C,
   . une filière d'extrusion de la pâte de caséinate à ladite température et avec un taux d'humidité compris entre 30 et 40% pour former à la sortie de la machine d'extrusion un boudin continu de pâte de caséinate,
- des moyens de formation à partir du boudin d'une plaque continue et de faible épaisseur et de refroidissement de la pâte de caséinate à une température inférieure à 20°C,
- des moyens de découpage longitudinal de la plaque en plusieurs bandes parallèles,
- et des moyens de découpage transversal de ces bandes en morceaux de caséinate de faibles dimensions.

Selon d'autres caractéristiques de l'invention :
- les vis de la machine d'extrusion présentent, dans les zones de transport un pas variable,
- les vis de la machine d'extrusion sont formées, dans la première zone de malaxage., par des éléments tri-lobes en forme de triangle isocèle et dont les sommets sont tronqués pour réaliser un passage contrôlé du mélange, les éléments tri-lobes de chaque vis étant décalés les uns par rapport aux autres et lesdits éléments tri-lobes des deux vis s'imbriquant les uns dans les autres,
- les vis de la machine d'extrusion sont formées, dans la deuxième zone de malaxage, par des filets à pas inversés dont les bords sont munis d'ouvertures régulièrement réparties autour de l'axe, les ouvertures de chaque filet étant décalées par rapport aux ouvertures ,des filets adjacents,
- les vis de la machine d'extrusion sont formées, dans la troisième zone de malaxage, par des éléments bi-lobes en forme de losange et dont les sommets sont tronqués pour réaliser un passage contrôlé de la pâte de caséinate, les éléments bi-lobes de chaque vis étant décalés de 90° les uns par rapport aux autres et lesdits éléments bi-lobes des deux vis s'imbriquant les uns dans les autres,
- les moyens de formation de la plaque continue de pâte de caséinate et de refroidissement de cette pâte sont formés, d'une part, par deux rouleaux parallèles munis chacun d'un circuit de circulation d'un fluide de refroidissement et ménageant entre eux un intervalle d'écoulement de la pâte de caséinate et, d'autre part, par un tapis transporteur sans fin, disposé au-dessous de l'un des rouleaux et couvrant sensiblement la moitié de la surface externe de ce rouleau, ledit tapis transporteur et .ledit rouleau ménageant entre.eux un passage d'écoulement de la pâte de caséinate,
- les moyens de découpage longitudinal de la plaque en plusieurs bandes parallèles sont formés par deux rouleaux parallèles s'étendant perpendiculairement au sens de déplacement de la plaque et ménageant entre eux un passage dans ladite plaque, l'un des rouleaux comportant des lames de coupe circulaires et parallèles les unes aux autres,
- les moyens de découpage transversal des bandes en morceaux sont formés par des lames de coupe s'étendant perpendiculairement au sens de déplacement desdites bandes et entraînées en rotation par un arbre horizontal.

D'autres caractéristiques et avantages de l'invention apparaîtront au cours de la description qui va suivre, et faite en référence aux dessins annexés, sur lesquels:
- la Fig. 1 est une vue schématique en coupe dans un plan vertical passant par l'axe d'une vis d'une machine d'extrusion d'une installation de préparation en continu de caséinate, conforme à l'invention,
- la Fig. 2 est une vue en coupe selon la ligne 2-2 de la Fig. 1,
- la Fig. 3 est une vue schématique en perspective d'un tronçon des vis de la machine d'extrusion dans la première zone de malaxage,
- la Fig. 4 est une vue schématique en perspective d'un tronçon des vis de la machine d'extrusion dans la deuxième zone de malaxage,
- la Fig. 5 est une vue schématique en perspective d'un tronçon des vis dans la troisième zone de malaxage,
- la Fig. 6 est une vue schématique en élévation des moyens de refroidissement et de découpage de la pâte de caséinate à la sortie de la machine d'extrusion dans l'installation de préparation en continu de caséinate, conforme à l'invention,
- la Fig. 7 est une vue schématique en coupe axiale montrant un mode de réalisation d'un circuit de refroidissement d'un rouleau des moyens de refroidissement,
- la Fig. 8 est une vue schématique en perspective des moyens de découpage de la pâte de caséinate.

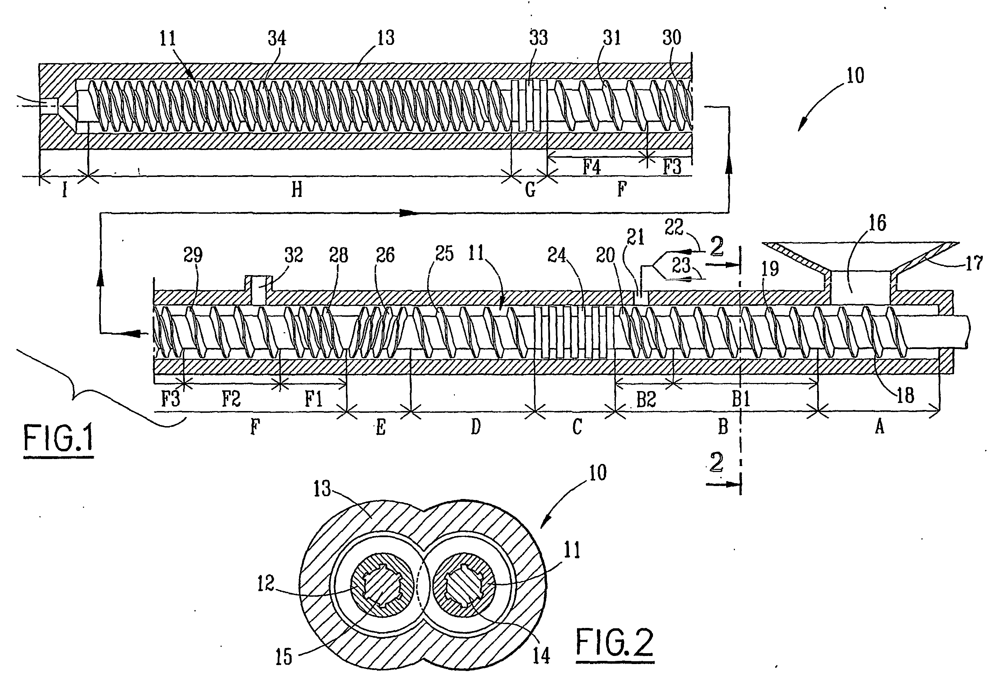

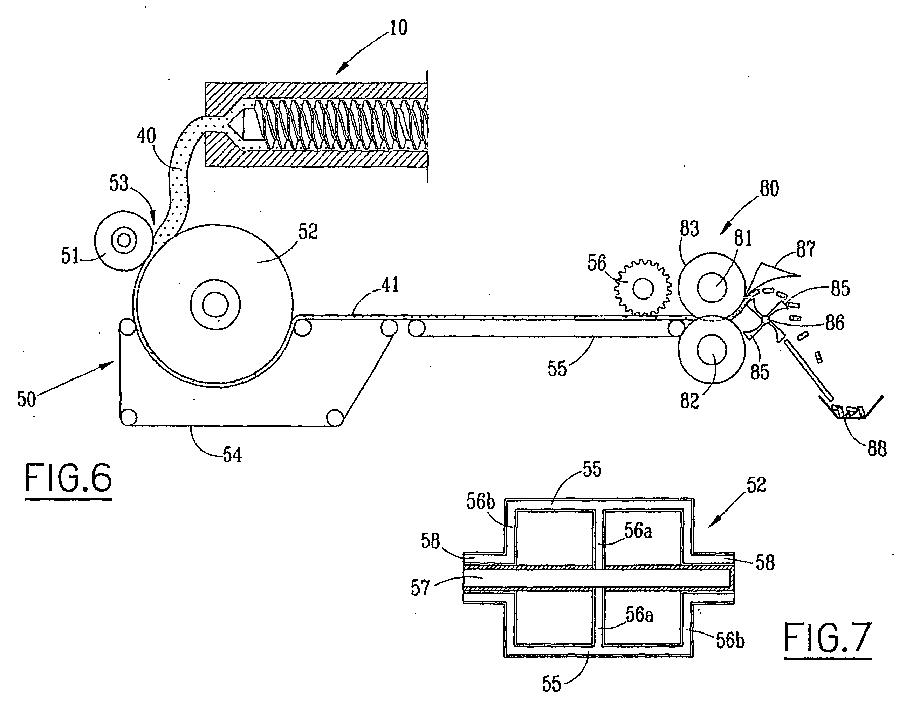

Sur les Figs. 1 et 6, on a représenté schématiquement une installation de préparation en continu de caséinate à partir de protéines de lait en poudre non soluble.

D'une manière générale, cette installation comprend :
- une machine d'extrusion 10 qui permet d'obtenir à partir de protéines de lait en poudre non soluble, une pâte de caséinate visqueuse à une température comprise entre 70 et 95°C et possédant un taux d'humidité compris entre 30 et 40%,
- des moyens 50 de formation d'une plaque continue de pâte de caséinate et de refroidissement de cette pâte à une température inférieure à 20°C,
- et des moyens de découpage de la plaque en plusieurs bandes parallèles et de découpage de ces bandes en morceaux de caséinate de faibles dimensions.

Ainsi que représenté sur les Figs. 1 et 2, la machine d'extrusion 10 est du type à deux vis co-rotatives et co-pénétrantes et comprend deux vis 11 et 12 entraînées en rotation autour de leurs axes par un moteur et un réducteur, non représentés, à l'intérieur d'une enceinte allongée formant un fourreau 13 qui les enveloppe.

Les vis 11 et 12 sont munies notamment de filets hélicoïdaux ou d'éléments de traitement de la matière introduite dans le fourreau 13, comme on le verra ultérieurement, qui engrènent les uns dans les autres et la paroi interne dudit fourreau 13 forme deux lobes cylindriques sécants de diamètre intérieur légèrement supérieur au diamètre extérieur des filets et des éléments de traitement.

Les deux vis 11 et 12 sont entraînées à la même vitesse de rotation et dans le même sens de telle sorte que les deux vis sont identiques, les filets et les éléments de traitement étant simplement décalés les uns par rapport aux autres.

Ainsi que représenté à la Fig. 2, les vis 11 et 12 sont avantageusement constituées d'arbres cannelés, respectivement 14 et 15, sur lesquels sont empilés les tronçons de vis.

L'alésage intérieur de ces tronçons de vis est muni de cannelures correspondant à celles de l'arbre et la partie extérieure est munie de filets hélicoïdaux ou d'éléments de traitement de la matière dont le pas et la configuration diffèrent selon le tronçon considéré pour le traitement et le transport de cette matière.

On peut ainsi disposer d'un assez grand nombre de tronçons ayant des configurations différentes selon le type de traitement à réaliser sur la matière.

La machine d'extrusion 10 représentée à la Fig. 1 comprend une zone A d'introduction en continu dans le fourreau 13 de protéines de lait en poudre non soluble et de transport de ces protéines de lait vers l'aval de ladite machine d'extrusion 10.

Dans cette zone A, le fourreau 13 est percé, à son extrémité amont par rapport au sens d'écoulement de la matière, d'un orifice d'alimentation 16 surmonté d'une trémie 17 dans laquelle se déverse en continu la poudre de protéines de lait distribuée par exemple par un doseur, non représenté.

Dans la zone d'introduction A, les vis 11 et 12 sont munies de filets 18 à pas large afin d'assurer le transport de la poudre de protéines de lait introduite par l'orifice 16 qui s'ouvre largement sur les deux vis 11 et 12 et afin de répartir ladite poudre dans les filets des vis.

Ainsi, la poudre de protéines de lait est transportée vers l'aval de la machine d'extrusion 10 dans la zone B qui comporte un premier tronçon B1 dans lequel les vis 11 et 12 sont munies de filets 19 à pas large et un second tronçon B2 dans lequel les vis 11 et. 12 sont munies de filets 20 à pas resserré.

La poudre de protéines de lait est donc transportée dans le premier tronçon B1 de la zone B, puis dans le second tronçon B2 au niveau duquel de l'eau et un réactif alcalin sont injectés.

A cet effet, le fourreau 13 est percé d'un orifice 21 raccordé, par des conduits respectivement 22 et 23, à des moyens d'injection d'eau et du réactif alcalin.

Le réactif alcalin est constitué par de la soude ou de la chaux et le pourcentage d'eau plus caséine par rapport au réactif alcalin est compris entre 90 et 97%.

Le mélange constitué par les protéines de lait, l'eau et le réactif alcalin est transporté par les vis 11 et 12 dans une première zone C dans laquelle ce mélange est soumis à un malaxage intense sous pression.

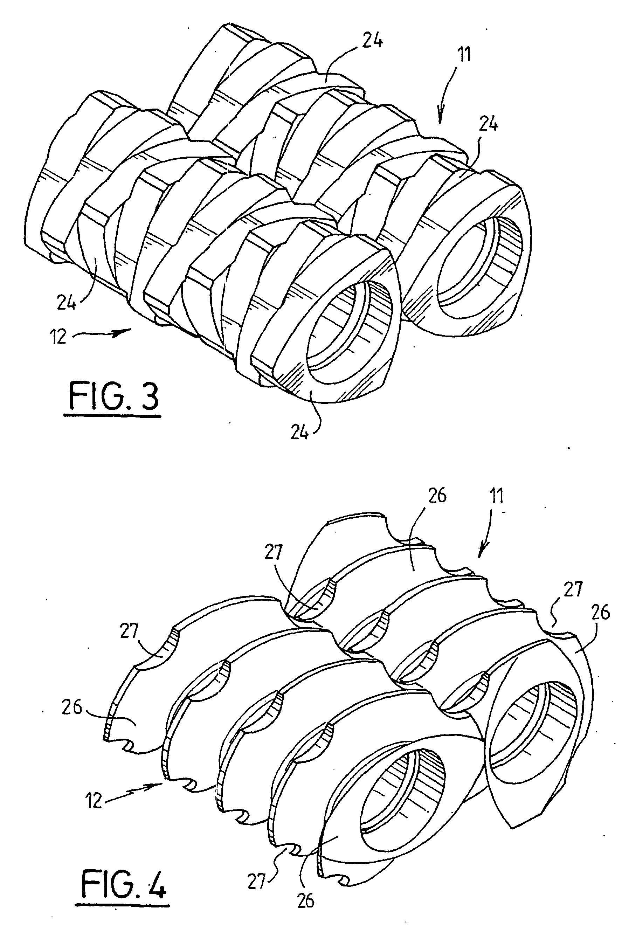

Pour cela, les vis 11 et 12 dans la zone C sont formées, comme représenté à la Fig. 3, par des éléments tri-lobes 24 juxtaposés et qui présentent une forme de triangle isocèle dont les sommets sont tronqués pour réaliser un passage contrôlé du mélange vers l'aval de la machine d'extrusion.

Comme le montre la Fig. 3, les éléments tri-lobes 24 de chaque vis 11 et 12 sont décalés les uns par rapport aux autres et sont également décalés d'une vis à l'autre de manière qu'ils s'imbriquent les uns dans les autres afin de réaliser un malaxage et un mélange intenses de la poudre de protéines de lait avec l'eau et le réactif alcalin.

Du fait de ce malaxage intense, il se produit une élévation de la température du mélange permettant ainsi d'amorcer la réaction chimique entre les protéines de lait et le réactif alcalin.

A titre d'exemple, la poudre de protéines de lait est introduite dans la machine d'extrusion 10 à la température ambiante d'environ 20°C et à la sortie de la zone C de malaxage, le mélange est à une température d'environ 80°C.

A la sortie de la première zone de malaxage C, le mélange est transféré dans une zone D dans laquelle les vis 11 et 12 sont munies de filets 25 à pas large vers une deuxième zone E de malaxage sous pression et de cisaillement intenses.

Ainsi que représenté à la Fig. 4, les vis 11 et 12 dans la zone E sont constituées par des filets 26 à pas inversé dont les bords périphériques sont munis d'ouvertures 27 régulièrement réparties autour de l'axe de la vis correspondante.

Les ouvertures 27 de chaque filet 26 sont décalées par rapport aux ouvertures des filets adjacents.

Les ouvertures 27 des filets 26 permettent de contrôler le passage du débit du mélange vers l'aval ce qui détermine un freinage dans cette zone E et un effort de compression à l'amont.

Il s'ensuit donc un important cisaillement qui homogénéise le mélange et complète la réaction chimique avec une augmentation de la température de ce mélange pour réaliser sa fusion et obtenir une pâte visqueuse de caséinate.

En effet, l'opération de malaxage et de cisaillement dans la zone E entraîné un échauffement du mélange, une partie importante du travail mécanique étant convertie en une énergie thermique.

A titre d'exemple, la température du mélange à la sortie de la zone E est de l'ordre de 90°.

A la suite de la deuxième zone E de malaxage et de cisaillement, les vis 11 et 12 de la machine d'extrusion déterminent une zone F de transport et de refroidissement de la pâte de caséinate.

Dans cette zone F, les vis 11 et 12 sont formées de plusieurs tronçons de pas différents, un premier tronçon F1 muni de filets 28 à pas resserré, un deuxième tronçon F2 muni de filets 29 à pas large, un troisième tronçon F3 muni de filets 30 à pas resserré et un quatrième tronçon F4 muni de filets 31 à pas large.

Au début de la zone F, le fourreau 13 de la machine d'extrusion 10 comporte un orifice de dégazage 32 qui débouche dans les alésages sécants dudit fourreau 13.

Après le passage de la pâte de caséinate dans zone E où cette pâte a été soumise à un malaxage sous pression et à un cisaillement intenses, la pâte de caséinate subie dans les tronçons F1 et F2 de la zone F, une décompression de telle sorte que le gaz contenu dans ladite pâte s'échappe par l'orifice 32.

Au cours de son transfert dans la zone F, la pâte de caséinate est refroidie pour la maintenir à une température comprise entre 80 et 95°C ce qui permet également d'ajuster sa viscosité.

A la sortie de la zone de transport F, la pâte de caséinate traverse une troisième zone G de malaxage et d'échange thermique avec un refroidissement pour la maintenir à une température inférieure à 95°C.

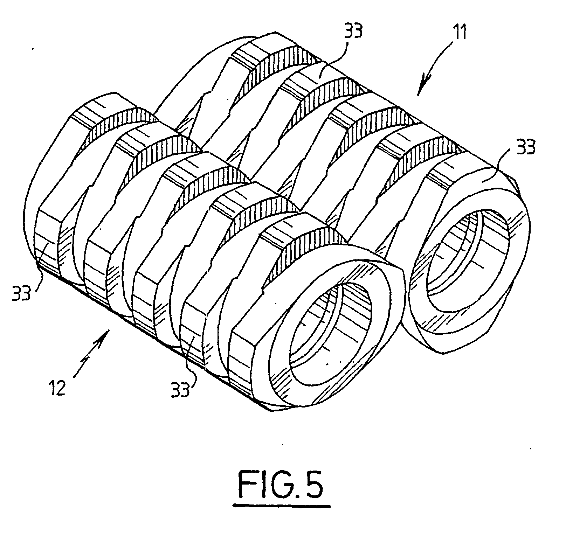

Ainsi que représenté à la Fig. 5, les vis 11 et 12 sont constituées, dans la zone G, par des éléments bi lobes 33 qui présentent une forme de losange dont les sommets sont tronqués et arrondis pour réaliser un passage contrôlé de la pâte de caséinate entre ces éléments bi lobes 33 et la paroi interne du fourreau 13.

Les éléments bi-lobes 33 d'une même vis sont décalés de 90° les uns par rapport aux autres et également de 90° d'une vis à l'autre de telle manière qu'ils s'imbriquent les uns dans les autres.

La pâte de caséinate est ensuite transférée par une zone H de transport et d'échange thermique vers la sortie de la machine d'extrusion 10.

Dans cette zone H, les vis 11 et 12 sont munies de filets 24 à pas resserré.

Au cours de son passage dans les zones G et H, la pâte de caséinate est refroidie de façon à la maintenir à une température comprise entre 70 et 95°C.

Le refroidissement de la pâte de caséinate au cours de son transfert dans la machine d'extrusion 10 est réalisé par exemple par un circuit de circulation d'un fluide de refroidissement qui est ménagé dans la paroi du fourreau 13.

En effet, lors du traitement des protéines de lait dans la machine d'extrusion 10 pour obtenir une pâte de caséinate, la température de la matière doit être maitrisée et ne pas dépasser 95°C car pour une température supérieure, la réaction chimique ne se déroule pas dans de bonnes conditions et des points brûlés peuvent apparaître sur la pâte de caséinate.

De plus, pour faciliter le traitement de la pâte de caséinate après son passage dans la machine d'extrusion, il est préférable que la température de sortie de cette pâte de caséinate soit maîtrisée.

La machine d'extrusion 10 est équipée à son extrémité avale par rapport au sens d'écoulement de la matière, d'une zone I d'extrusion formée par une filière 35 pour que la pâte de caséinate sorte de ladite machine d'extrusion sous la forme d'un boudin 40 continu.

A la sortie de la filière 35, la pâte de caséinate est à une température comprise entre 70 et 95°C et possède un taux d'humidité compris entre 30 et 40%.

A titre d'exemple, la machine d'extrusion 10 présente la configuration indiquée dans le tableau ci-dessous :

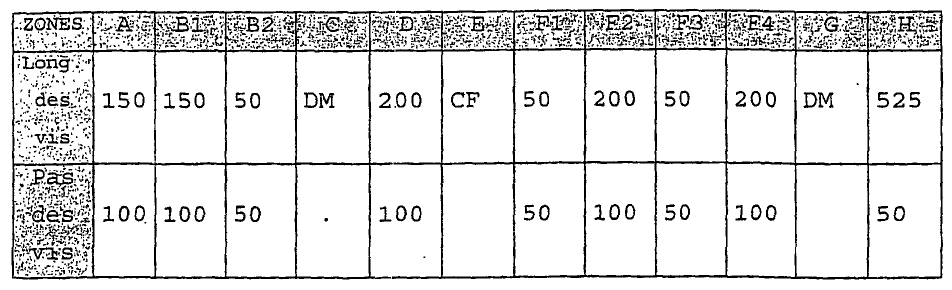

Le boudin 40 de pâte de caséinate sortant de la machine d'extrusion 10 est transféré dans les moyens 50 de formation, à partir dudit boudin 40, d'une plaque 41 continue et de faible épaisseur. Ces moyens 50 assurent également le refroidissement de la pâte de caséinate à une température inférieure à 20°C.

Ainsi que représenté à la Fig. 6, les moyens 50 comprennent deux rouleaux parallèles, respectivement 51 et 52, munis chacun d'un circuit de circulation d'un fluide de refroidissement et ménageant entre eux un intervalle 53 d'écoulement de la pâte de caséinate. Les moyens 50 comprennent également un tapis transporteur sans fin 54 disposé au-dessous de l'un des rouleaux et dans l'exemple de réalisation représenté à la Fig. 6, au-dessous du rouleau 52.

Le tapis transporteur 54 couvre sensiblement la moitié de la surface externe de ce rouleau 52 et ledit tapis transporteur 54 et ledit rouleau 52 ménagent entre eux un passage d'écoulement de la pâte de caséinate de façon à former la plaque 41.

Dans l'exemple de réalisation représenté, le rouleau 51 a un diamètre inférieur au rouleau 52 et l'axe dudit rouleau 51 est disposé au-dessus de l'axe du rouleau 52 et la pâte de caséinate lors de son écoulement est en contact avec sensiblement les deux tiers de la surface externe du rouleau ce qui permet de l'amener progressivement à une température inférieure à 20°C ce qui facilite sa coupe ultérieure.

Sur la Fig. 7, on a représenté schématiquement un exemple de réalisation du circuit de refroidissement du rouleau 52, le circuit de refroidissement du rouleau 53 étant identique.

Ainsi que représenté sur cette figure, le circuit de refroidissement est formé par des canaux périphériques 55 s'étendant parallèlement à l'axe du rouleau et relié par des canaux radiaux, respectivement 56a et 56b, d'une part, à un canal d'entrée 57 disposé dans l'axe du rouleau 52 et, d'autre part, à un canal de sortie 58 dudit fluide disposé également dans l'axe de ce rouleau 52 et concentriquement audit canal d'entrée 57.

Dans l'exemple de réalisation représenté à la Fig. 7, les canaux radiaux 56 sont disposés sensiblement au milieu du rouleau 52 si bien que le fluide de refroidissement entrant par une extrémité du canal d'entrée 57 est réparti d'un côté et de l'autre des canaux périphériques 55 et ce fluide de refroidissement est évacué à chaque extrémité du rouleau 52.

Les rouleaux 51 et 52 comportent un revêtement anti-adhérent composé d'une couche dure et légèrement rugueuse, comme par exemple de la céramique, du carbure, un métal ou un alliage, enduite d'un polymère anti-adhérent, comme par exemple un polymère fluoré.

Après son passage entre le rouleau 52 et le tapis transporteur sans fin 54, la plaque de caséinate 41 a une épaisseur constante comprise entre 2 et 3mm.

Cette plaque 41 est transférée par un tapis transporteur 55 vers les moyens de découpage 80.

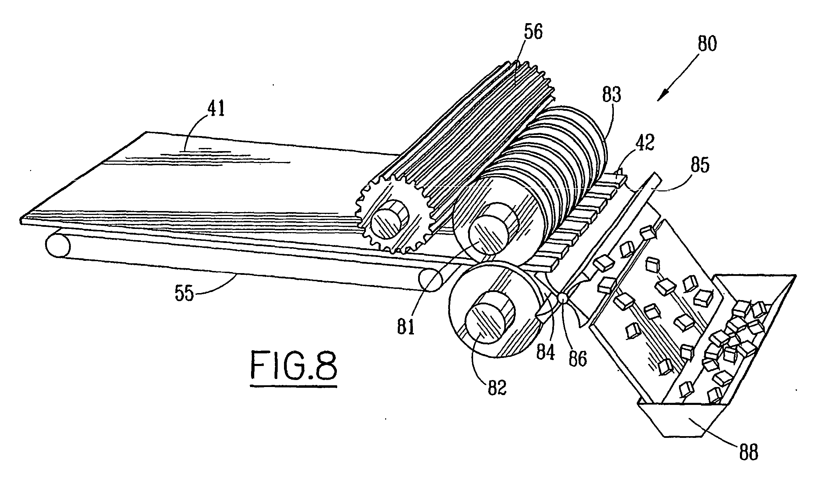

Comme représenté à la Fig. 8, la plaque 41 de pâte de caséinate est transférée dans les moyens 80 de découpage à l'aide du tapis transporteur 55 et d'un rouleau d'entraînement 56 disposé au-dessus dudit tapis transporteur 55 et qui comporte sur sa surface externe des crans permettant d'entraîner en translation ladite plaque 41.

Cette plaque 41 est découpée en bandes parallèles au moyen de deux rouleaux parallèles, respectivement 81 et 82, s'étendant perpendiculairement au sens de déplacement de la plaque 41.

Dans l'exemple de réalisation représenté à la Fig. 8, le rouleau supérieur 81 comporte des lames dé découpe 83 circulaires et parallèles les unes aux autres.

Le rouleau inférieur 82 comporte des fentes 84 disposées en regard des lames circulaires 83 si bien que, lors du passage de la plaque 41 entre les rouleaux 81 et 82, les lames circulaires 83 pénètrent dans les fentes 83 assurant la découpe longitudinale de la plaque 41 en bandes 42 de pâte de caséinate s'étendant parallèlement les unes aux autres.

Ensuite, les bandes 42 de pâte de caséinate sont découpées en morceaux de faibles dimensions au moyen de lames de coupe 85 s'étendant perpendiculairement au sens de déplacement des bandes 42 et entraînées en rotation par un arbre horizontal 86.

Comme représenté à la Fig. 6, lors de la rotation des lames de coupe 85, les bandes 42 de pâte de caséinate sont plaquées contre un déflecteur 87 ce qui permet de maintenir ces bandes pour permettre aux lames de coupe 85 de découper lesdites bandes en morceaux.

Les morceaux ainsi découpés sont récupérés dans un récipient 88.

Le procédé et l'installation selon l'invention permettent de transformer les protéines de lait en pâte de caséinate par réaction chimique et de refroidir et de laminer le produit issu de la réaction chimique et de découper ce produit en morceaux qui présentent une excellente solubilité et une grande neutralité chimique.

## Revendications

1. Procédé de préparation en continu de caséinate, **caractérisé en ce que** :
- on introduit en continu des protéines de lait en poudre non soluble dans une machine d'extrusion à deux vis (11, 12) co-rotatives et co-pénétrantes entraînées en rotation autour d'axes parallèles à l'intérieur d'un fourreau (13) de forme allongée,
- on effectue dans le fourreau (13) de la machine d'extrusion (10) une première étape de transport de la poudre de protéines de lait avec introduction dans le fourreau (13) à la fin de cette première étape d'eau et d'un réactif alcalin,
- on soumet le mélange formé par les protéines de lait, l'eau et le réactif alcalin à un premier malaxage intense sous pression avec élévation de la température du mélange pour amorcer la réaction chimique entre les protéines de lait et le réactif alcalin,
- on effectue dans le fourreau (13) une seconde étape de transport du mélange au cours de laquelle se poursuit la réaction chimique et l'élévation de la température de ce mélange,
- on soumet le mélange à un deuxième malaxage sous pression et à un cisaillement intenses pour compléter la réaction chimique avec augmentation de la température du mélange pour réaliser la fusion de ce mélange et obtenir une pâte visqueuse de caséinate,
- on effectue une troisième étape de transport et de refroidissement de la pâte de caséinate avec, au début de cette étape, une opération de dégazage pour diminuer et ajuster la température et la viscosité de la pâte de caséinate,
- on soumet la pâte de caséinate à un dernier malaxage et à un échange thermique avec refroidissement de ladite pâte,
- on effectue une quatrième étape de transport et d'échange thermique avec refroidissement pour maintenir la pâte de caséinate à une température comprise entre 70 et 95°C,
- on extrude la pâte de caséinate à ladite température et avec un taux d'humidité compris entre 30 et 40% pour former à la sortie de la machine d'extrusion (10) un boudin (40) continu de pâte de caséinate,
- on forme à partir du boudin (40) une plaque (41) continue et de faible épaisseur de pâte de caséinate et simultanément on refroidit ladite plaque (41) de caséinate à une température inférieure à 20°C,
- on découpe longitudinalement la plaque (41) en plusieurs bandes parallèles (42),
- et on découpe transversalement les bandes (42) en morceaux de caséinate de faibles dimensions.

2. Procédé selon la revendication 1, **caractérisé en ce que** l'on utilise comme réactif alcalin de la soude ou de la chaux.

3. Procédé selon la revendication 1 ou 2, **caractérisé en ce que** le pourcentage d'eau plus caséine par rapport au réactif alcalin est compris entre 90 et 97%.

4. Installation de préparation en continu de caséinate, **caractérisée en ce qu'**elle comprend :
- une machine d'extrusion formée de deux vis (11, 12) co-rotatives et co-pénétrantes entraînées en rotation autour d'axes parallèles à l'intérieur d'un fourreau (13) de forme allongée muni d'alésages sécants et déterminant successivement de l'amont à l'aval :
. une zone (A) d'introduction en continu dans le fourreau (13) de protéines de lait en poudre non soluble et de transport de cette poudre de protéines de lait,
. une zone (B) de transport de la poudre protéines de lait avec introduction d'eau et d'un réactif alcalin dans le fourreau (13) à la fin de cette zone,
. une première zone (C) de malaxage intense sous pression du mélange formé par les protéines de lait, l'eau et le réactif alcalin avec élévation de la température de mélange pour amorcer la réaction chimique entre les protéines de lait et le réactif alcalin,
. une zone (D) de transport du mélange dans laquelle se poursuit la réaction chimique et l'augmentation de la température de ce mélange,
. une deuxième zone (E) de malaxage sous pression et de cisaillement intenses du mélange complétant la réaction chimique avec augmentation de la température de ce mélange pour réaliser la fusion dudit mélange et obtenir une pâte visqueuse de caséinate,
. une zone (F) de transport et de refroidissement de la pâte de caséinate avec au début de cette zone un orifice (32) de dégazage ménagé dans le fourreau et débouchant dans lesdits alésages sécants pour diminuer et ajuster la température et la viscosité de cette pâte de caséinate,
. une troisième zone (G) de malaxage et d'échange thermique avec refroidissement de ladite pâte,
. une zone (H) de transport et d'échange thermique avec refroidissement pour maintenir la pâte de caséinate à une température comprise ente 70 et 95°C,
. une filière (35) d'extrusion de la pâte de caséinate à ladite température et avec un taux d'humidité compris entre 30 et 40% pour former à la sortie de la machine d'extrusion (10) un boudin (40) continu de pâte de caséinate,
- des moyens (50) de formation à partir du boudin (40) d'une plaque (41) continue et de faible épaisseur et de refroidissement de la pâte de caséinate à une température inférieure à 20°C,
- des moyens (81, 82, 83, 34) de découpage longitudinal de la plaque (41) en plusieurs bandes (42) parallèles,
- et des moyens (85, 86) de découpage transversal de ces bandes (42) en morceaux de caséinate de faibles dimensions.

5. Installation selon la revendication 4, **caractérisée en ce que** les vis (11, 12) de la machine d'extrusion (10) présentent, dans les zones de transport, un pas variable.

6. Installation selon la revendication 4, **caractérisée en ce que** les vis (11, 12) de la machine d'extrusion 10 sont formées dans la première zone C de malaxage, par des éléments tri-lobes (24) en forme de triangle isocèle et dont les sommets sont tronqués pour réaliser un passage contrôlé du mélange, les éléments tri-lobes (24) de chaque vis (11, 12) étant décalés les uns par rapport aux autres et lesdits éléments tri lobes (24) des deux vis (11, 12) s'imbriquant les uns dans les autres.

7. Installation selon la revendication 4, **caractérisée en ce que** les vis (11, 12) de la machine d'extrusion (10) sont formées, dans la deuxième zone E de malaxage, par des filets (26) à pas inversés dont les bords sont munis d'ouvertures (27)régulièrement répartis autour de l'axe, les ouvertures (27) de chaque filet (26) étant décalées par rapport aux ouvertures (27) des filets adjacents.

8. Installation selon la revendication 4, **caractérisée en ce que** les vis (11, 12) de la machine d'extrusion (10) sont formées, dans la troisièmes zone G de malaxage par des éléments bi-lobes (33) en forme de losange et dont les sommets sont tronqués pour réaliser un passage contrôlé de la pâte de caséinate, les éléments bi-lobes (33) de chaque vis (11, 12) étant décalés de 90°C les uns par rapport aux autres et lesdits éléments bi-lobes (33) des deux vis (11, 12) s'imbriquant les uns dans les autres.

9. Installation selon la revendication 4, **caractérisée en ce que** les moyens de formation de la plaque continue (41) de pâte de caséinate et de refroidissement de cette pâte sont formés, d'une part, par deux rouleaux (51, 52) parallèles munis chacun d'un circuit de circulation d'un fluide de refroidissement et ménageant entre eux un intervalle (53) d'écoulement de la pâte de caséinate, et d'autre part, par un tapis transporteur sans fin (54) disposé au-dessous de l'un (52) des rouleaux et couvrant sensiblement la moitié de la surface externe de ce rouleau (52), ledit tapis transporteur (54) et ledit rouleau (52) ménageant entre eux un passage d'écoulement de la pâte de caséinate.

10. Installation selon la revendication 9, **caractérisée en ce que** le rouleau (52) associé au tapis transporteur (54) présente un diamètre supérieur au diamètre de l'autre rouleau (51) et la pâte de caséinate lors de son écoulement est en contact avec sensiblement les deux tiers de la surface externe dudit rouleau (52) pour l'amener progressivement à une température inférieure à 20°C.

11. Installation selon la revendication 9 ou 10, **caractérisée en ce que** le circuit de refroidissement de chaque rouleau (51, 52) est formé par des canaux périphériques (55) s'étendant parallèlement à l'axe du rouleau et reliés par des canaux radiaux (56a, 56b), d'une part, à un canal d'entrée (57) du fluide disposé dans l'axe du rouleau et, d'autre part, à un canal de sortie (58) dudit fluide disposé dans l'axe de ce rouleau et concentriquement audit-canal d'entrée (57).

12. Installation selon la revendication 9 ou 10, **caractérisée en ce que** chaque rouleau (51, 52) comporte un revêtement anti-adhérent.

13. Installation selon la revendication 12, **caractérisée en ce que** le revêtement anti-adhérent est composé d'une couche dure et légèrement rugueuse, comme par exemple de la céramique, du carbure, un métal ou un alliage, enduite d'un polymère anti-adhérent, comme par exemple un polymère fluoré.

14. Installation selon la revendication 4, **caractérisée en ce que** les moyens de découpage longitudinal de la plaque (41) en plusieurs bandes parallèles (42) sont formés par deux rouleaux (81, 82) parallèles s'étendant perpendiculairement au sens de déplacement de la plaque (41), l'un (81) des rouleaux comportant des lames de coupe (83) circulaires parallèles les unes aux autres.

15. Installation selon la revendication 4, **caractérisée en ce que** les moyens de découpage transversal des bandes (42) en morceaux sont formés par des lames de coupe (85) s'étendant perpendiculairement au sens de déplacement desdites bandes (42) et entraînées en rotation par un arbre horizontal (86).

## Claims

1. Method of continuously preparing caseinate, **characterised in that**:
- milk proteins in non-soluble powder form are continuously introduced into an extruder machine having two co-rotating and co-penetrating screws (11, 12) rotated about parallel axes inside a sheath (13) of elongate shape,
- in the sheath (13) of the extruder machine (10), a first step of transporting the milk protein powder is carried out with the introduction of water and an alkaline reagent into the sheath (13) at the end of this first step,
- the mixture formed by the milk proteins, the water and the alkaline reagent is subjected to a first intense kneading under pressure, the temperature of the mixture being raised to initiate the chemical reaction between the milk proteins and the alkaline reagent,
- in the sheath (13) a second step of transporting the mixture is carried out in the course of which the chemical reaction continues and the temperature of this mixture continues to rise,
- this mixture is subjected to a second intense kneading under pressure and to intense shearing in order to complete the chemical reaction, the temperature of the mixture being increased in order to cause this mixture to melt and to obtain a viscous caseinate paste,
- a third step of transporting and cooling the caseinate paste is carried out, with, at the start of this step, a degassing operation to reduce and adjust the temperature and the viscosity of the caseinate paste,
- the caseinate paste is subjected to a last kneading and to heat exchange with cooling of said paste,
- a third step of transporting and of heat exchange with cooling is carried out to keep the caseinate paste at a temperate of between 70 and 95°C,
- the caseinate paste is extruded at said temperature and with a moisture content of between 30 and 40% to form a continuous strand (40) of caseinate paste at the outlet of the extruder machine (10),
- from the strand (40) is formed a continuous thin sheet (41) of caseinate paste and said sheet (41) of caseinate is simultaneously cooled to a temperature below 20°C,
- the sheet (41) is cut longitudinally into a plurality of parallel strips (42),
- and the strips (42) are cut transversely into small-sized pieces of caseinate.

2. Method according to claim 1, **characterised in that** sodium hydroxide or lime is used as the alkaline reagent.

3. Method according to claim 1 or 2, **characterised in that** the percentage of water plus casein in relation to the alkaline reagent is between 90 and 97%.

4. Installation for continuously preparing caseinate, **characterised in that** it comprises:
- an extruder machine formed from two co-rotating and co-penetrating screws (11, 12) rotated about parallel axes inside a sheath (13) of elongate shape and provided with intersecting bores and defining successively from upstream to downstream:
• a zone (A) for continuously introducing milk proteins in non-soluble powder form into the sheath (13) and for transporting this milk protein powder,
• a zone (B) for transporting the milk powder protein with the introduction of water and an alkaline reagent into the sheath (13) at the end of this zone,
• a first zone (C) of intense kneading under pressure of the mixture formed by the milk proteins, the water and the alkaline reagent, the temperature of the mixture being increased to initiate the chemical reaction between the milk proteins and the alkaline reagent,
• a zone (D) for transporting the mixture in which the chemical reaction continues and the temperature of this mixture continues to be increased,
• a second zone (E) for intense kneading under pressure and intense shearing of the mixture, completing the chemical reaction, the temperature of this mixture being increased in order to cause said mixture to melt and to obtain a viscous caseinate paste,
• a zone (F) for transporting and cooling the caseinate paste, with, at the start of this zone, a degassing opening (32) provided in the sheath and opening out into said intersecting bores to reduce and adjust the temperature and the viscosity of this caseinate paste,
• a third zone (G) of kneading and heat exchange with cooling of said paste,
• a zone (H) for transporting and heat exchange with cooling to keep the caseinate paste at a temperature of between 70 and 95°C,
• a die (35) for extruding the caseinate paste at said temperature and with a humidity content of between 30 and 40% to form a continuous strand (40) of caseinate paste at the outlet of the extruder machine (10),
- means (50) for forming from the strand (40) a continuous thin sheet (41) and for cooling the caseinate paste to a temperature below 20°C,
- means (81, 82, 83, 34) for cutting the sheet (41) longitudinally into a plurality of parallel strips (42),
- and means (85, 86) for cutting these strips (42) transversely into small-sized pieces of caseinate.

5. Installation according to claim 4, **characterised in that** the screws (11, 12) of the extruder machine (10) have a variable pitch in the transport zones.

6. Installation according to claim 4, **characterised in that** the screws (11, 12) of the extruder machine (10) are formed, in the first kneading zone C, by three-lobed elements (24) in the form of isosceles triangles, the vertices of which are truncated so as to realise a controlled passage of the mixture, the three-lobed elements (24) of each screw (11, 12) being offset relative to one another and said three-lobed elements (24) of the two screws (11, 12) fitting into one another.

7. Installation according to claim 4, **characterised in that** the screws (11, 12) of the extruder machine (10) are formed, in the second kneading zone E, by threads (26) of reverse pitch, the edges of which are provided with openings (27) regularly distributed around the axis, the openings (27) of each thread (26) being offset relative to the openings (27) of the adjacent threads.

8. Installation according to claim 4, **characterised in that** the screws (11, 12) of the extruder machine (10) are formed, in the third kneading zone G, by two-lobed elements (33) of lozenge shape, the vertices of which are truncated so as to realise a controlled passage of the caseinate paste, the two-lobed elements (33) of each screw (11, 12) being offset by 90° relative to one another and said two-lobed elements (33) of the two screws (11, 12) fitting into one another.

9. Installation according to claim 4, **characterised in that** the means for forming the continuous sheet (41) of caseinate paste and for cooling this paste are formed, firstly, by two parallel rollers (51, 52), each provided with a circuit for circulating a cooling fluid and leaving between them a gap (53) for the caseinate paste to flow through, and, secondly, by an endless conveyor belt (54) disposed below one (52) of the rollers and covering substantially half of the external surface of this roller (52), said conveyor belt (54) and said roller (52) leaving between them a passage for the caseinate paste to flow through.

10. Installation according to claim 9, **characterised in that** the roller (52) associated with the conveyor belt (54) has a diameter greater than the diameter of the other roller (51) and the caseinate paste, as it flows, is in contact with substantially two-thirds of the external surface of said roller (52) to bring it progressively to a temperature below 20°C.

11. Installation according to claim 9 or 10, **characterised in that** the cooling circuit of each roller (51, 52) is formed by peripheral channels (55) which extend parallel to the axis of the roller and are linked by radial channels (56a, 56b), firstly to a fluid inlet channel (57) disposed in the axis of the roller and, secondly, to a fluid outlet channel (58) disposed in the axis of this roller and concentrically relative to said inlet channel (57).

12. Installation according to claim 9 or 10, **characterised in that** each roller (51, 52) includes a non-stick coating.

13. Installation according to claim 12, **characterised in that** the non-stick coating is made up of a hard and slightly rough layer such as ceramics, carbon, a metal or an alloy, for example, coated with a non-stick polymer, such as a fluorinated polymer for example.

14. Installation according to claim 4, **characterised in that** the means for cutting the sheet (41) longitudinally into a plurality of parallel strips (42) are formed by two parallel rollers (81, 82) which extend perpendicularly with respect to the travel direction of the sheet (41), one (81) of the rollers including circular cutting blades (83) which are parallel to one another.

15. Installation according to claim 4, **characterised in that** the means for cutting the strips (42) transversely into pieces are formed by cutting blades (85) extending perpendicularly with respect to the travel direction of said strips (42) and rotated by a horizontal shaft (86).

## Patentansprüche

1. Verfahren zur kontinuierlichen Zubereitung von Caseinat, **dadurch gekennzeichnet, dass**:
- Milchproteine als unlösliches Pulver kontinuierlich einer Strangpressmaschine zugeführt werden, die zwei gemeinsam rotierende und gemeinsam durchdringende Schrauben (11, 12) besitzt, die in einer Hülse (13) mit länglicher Form um zwei parallele Achsen rotatorisch angetrieben werden,
- in der Hülse (13) der Strangpressmaschine (10) ein erster Schritt des Transportierens des Milchprotein-Pulvers ausgeführt wird, wobei am Ende des ersten Schrittes Wasser und ein alkalisches Reagenz in die Hülse (13) eingeleitet werden,
- das Gemisch, das durch die Milchproteine, Wasser und das alkalische Reagenz gebildet ist, einem ersten starken Umrühren unter Druck mit Erhöhung der Temperatur des Gemisches unterworfen wird, um die chemische Reaktion zwischen den Milchproteinen und dem alkalischen Reagenz auszulösen,
- in der Hülse (13) ein zweiter Schritt des Transportierens des Gemisches ausgeführt wird, in dessen Verlauf die chemische Reaktion und die Erhöhung der Temperatur dieses Gemisches fortgesetzt werden,
- das Gemisch einem zweiten starken Umrühren unter Druck und einer starken Scherwirkung unterworfen wird, um die chemische Reaktion mit Erhöhung der Temperatur des Gemisches abzuschließen, um das Schmelzen dieses Gemisches zu verwirklichen und eine viskose Caseinat-Paste zu erhalten,
- ein dritter Schritt des Transportierens und des Abkühlens der Caseinat-Paste ausgeführt wird, wobei am Beginn dieses Schrittes ein Entgasungsvorgang ausgeführt wird, um die Temperatur und die Viskosität der Caseinat-Paste zu verringern und einzustellen,
- die Caseinat-Paste einem letzten Umrühren und einem Wärmeaustausch mit Abkühlung der Paste unterworfen wird,
- ein vierter Schritt des Transportierens und des Wärmeaustausches mit Abkühlung ausgeführt wird, um die Caseinat-Paste auf einer Temperatur im Bereich von 70 bis 95 °C zu halten,
- die Caseinat-Paste auf dieser Temperatur und mit einem Feuchtigkeitsgehalt im Bereich von 30 bis 40 % stranggepresst wird, um am Ausgang der Strangpressmaschine (10) eine kontinuierliche Wurst (40) aus Caseinat-Paste zu bilden,
- ausgehend von dieser Wurst (40) eine kontinuierliche Platte (41) mit geringer Dicke aus Caseinat-Paste gebildet wird und gleichzeitig die Caseinat-Platte (41) auf eine Temperatur unterhalb von 20 °C abgekühlt wird,
- die Platte (41) in Längsrichtung in mehrere parallele Streifen (42) zerschnitten wird,
- die Streifen (42) in Querrichtung in Caseinat-Stücke mit kleinen Abmessungen zerschnitten wird.

2. Verfahren nach Anspruch 1, **dadurch gekennzeichnet, dass** als alkalisches Reagenz Soda oder Kalk verwendet wird.

3. Verfahren nach Anspruch 1 oder 2, **dadurch gekennzeichnet, dass** der Prozentsatz von Wasser und Casein im Verhältnis zu dem alkalischen Reagenz im Bereich von 90 bis 97 % liegt.

4. Anlage zur kontinuierlichen Zubereitung von Caseinat, **dadurch gekennzeichnet, dass** sie umfasst:
- eine Strangpressmaschine, die aus zwei gemeinsam rotierenden und gemeinsam durchdringenden Schrauben (11, 12) gebildet ist, die um parallele Achsen in einer Hülse (13) mit länglicher Form rotatorisch angetrieben werden, wobei die Hülse (13) mit Sekantenbohrungen versehen ist und nacheinander von der Einlassseite zur Auslassseite festlegt:
- eine Zone (A) zum kontinuierlichen Einleiten von Milchproteinen in Form eines unlöslichen Pulvers in die Hülse (13) und zum Transportieren dieses Milchprotein-Pulvers,
- eine Zone (B) für den Transport des Milchprotein-Pulvers, wobei am Ende dieser Zone Wasser und ein alkalisches Reagenz in die Hülse (13) eingeleitet werden,
- eine erste Zone (C) zum starken Umrühren unter Druck des Gemisches, das durch die Milchproteine, Wasser und das alkalische Reagenz gebildet ist, mit Erhöhung der Temperatur des Gemisches, um die chemische Reaktion zwischen den Milchproteinen und dem alkalischen Reagenz auszulösen,
- eine Zone (D) des Transportierens des Gemisches, in der die chemische Reaktion und die Erhöhung der Temperatur dieses Gemisches fortgesetzt werden,
- eine zweite Zone (E) des starken Umrührens unter Druck und eines starken Scherens des Gemisches, um die chemische Reaktion mit Erhöhung der Temperatur dieses Gemisches abzuschließen, wodurch das Schmelzen des Gemisches verwirklicht wird und ein viskose Caseinat-Paste erhalten wird,
- eine Zone (F) des Transportierens und der Abkühlung der Caseinat-Paste, wobei am Beginn dieser Zone eine Entgasungsöffnung (32) vorgesehen ist, die in der Hülse ausgebildet ist und in die Sekantenbohrungen mündet, um die Temperatur und die Viskosität dieser Caseinat-Paste zu verringern und einzustellen,
- eine dritte Zone (G) des Umrührens und des Wärmeaustausches mit Abkühlung der Paste,
- eine Zone (H) des Transportierens und des Wärmeaustausches mit Abkühlung, um die Caseinat-Paste auf einer Temperatur im Bereich von 70 bis 95 °C zu halten, und
- ein Mundstück (35) zum Strangpressen der Caseinat-Paste auf der Temperatur und mit einem Feuchtigkeitsanteil im Bereich von 30 bis 40 %, um am Ausgang der Strangpressmaschine (10) eine kontinuierliche Wurst (40) aus der Caseinat-Paste zu bilden,
- Mittel (50) zum Bilden einer kontinuierlichen Platte (41) mit geringer Dicke ausgehend von der Wurst (40) und zum Abkühlen der Caseinat-Paste auf eine Temperatur unterhalb von 20 °C,
- Mittel (81, 82, 83, 34) zum longitudinalen Zerschneiden der Platte (41) in mehrere parallele Streifen (42), und
- Mittel (85, 86) zum transversalen Zerschneiden dieser Streifen (42) in Caseinat-Stücke mit kleinen Abmessungen.

5. Anlage nach Anspruch 4, **dadurch gekennzeichnet, dass** die Schrauben (11, 12) der Strangpressmaschine (10) in den Transportzonen eine variable Steigung aufweisen.

6. Anlage nach Anspruch 4, **dadurch gekennzeichnet, dass** die Schrauben (11, 12) der Strangpressmaschine (10) in der ersten Mischzone (C) aus Elementen (24) mit drei Keulen in Form eines gleichschenkligen Dreiecks mit abgeschnittenem Scheitel gebildet sind, um einen kontrollierten Durchgang des Gemisches zu verwirklichen, wobei die Dreikeulen-Elemente (24) jeder Schraube (11, 12) relativ zueinander versetzt sind und die Dreikeulen-Elemente (24) der zwei Schrauben (11, 12) ineinander verschachtelt sind.

7. Anlage nach Anspruch 4, **dadurch gekennzeichnet, dass** die Schrauben (11, 12) der Strangpressmaschine (10) in der zweiten Umrührzone (E) durch Gewinde (26) mit umgekehrten Steigungen gebildet sind, deren Stege mit um die Achse regelmäßig verteilten Öffnungen (27) versehen sind, wobei die Öffnungen (27) jedes Gewindes (26) relativ zu den Öffnungen (27) benachbarter Gewinde versetzt sind.

8. Anlage nach Anspruch 8, **dadurch gekennzeichnet, dass** die Schrauben (11, 12) der Strangpressmaschinen in der dritten Umrührzone (G) durch Elemente (33) mit zwei Keulen in Form einer Raute gebildet sind, deren Scheitel abgeschnitten sind, um einen kontrollierten Durchgang der Caseinat-Paste zu verwirklichen, wobei die Zweikeulen-Elemente (33) jeder Schraube (11, 12) relativ zu den anderen um 90° versetzt sind und die Zweikeulen-Elemente (33) der zwei Schrauben (11, 12) ineinander verschachtelt sind.

9. Anlage nach Anspruch 4, **dadurch gekennzeichnet, dass** die Mittel zum Bilden der kontinuierlichen Platte (41) aus Caseinat-Paste und zum Abkühlen dieser Paste einerseits aus zwei parallelen Walzen (51, 52) versehen sind, wovon jede mit einem Zirkulationskreis für ein Abkühlungsfluid versehen ist und zwischen denen ein Fließzwischenraum (53) für die Caseinat-Paste vorhanden ist, und andererseits aus einem Endlos-Transportteppich (54), der unter einer (52) der Walzen angeordnet ist und im Wesentlichen die Hälfte der äußeren Oberfläche dieser Walze (52) abdeckt, gebildet sind, wobei der Transportteppich (54) und die Walze (52) zwischen sich einen Fließdurchlass für die Caseinat-Paste bilden.

10. Anlage nach Anspruch 9, **dadurch gekennzeichnet, dass** die dem Transportteppich (54) zugeordnete Walze (52) einen Durchmesser aufweist, der größer als der Durchmesser der anderen Walze (51) ist, und die Caseinat-Paste bei ihrem Fließen mit im Wesentlichen zwei Dritteln der äußeren Oberfläche der Walze (52) in Kontakt ist, um sie progressiv auf eine Temperatur unterhalb von 20 °C zu bringen.

11. Anlage nach Anspruch 9 oder 10, **dadurch gekennzeichnet, dass** der Abkühlungskreis jeder Walze (51, 52) durch Umfangskanäle (55) gebildet ist, die sich parallel zu der Achse der Walze erstrecken und über radiale Kanäle (56a, 56b) einerseits mit einem Einlasskanal (57) für Fluid, der auf der Achse der Walze angeordnet ist, und andererseits mit einem Auslasskanal (58) für das Fluid, der auf der Achse dieser Walze und konzentrisch zu dem Einlasskanal (57) angeordnet ist, verbunden sind.

12. Anlage nach Anspruch 9 oder 10, **dadurch gekennzeichnet, dass** jede Walze (51, 52) eine Antihaftbeschichtung aufweist.

13. Anlage nach Anspruch 12, **dadurch gekennzeichnet, dass** die Antihaftbeschichtung aus einer harten und leicht rauen Schicht wie beispielsweise aus Keramik, Carbid, einem Metall oder einer Legierung, auf die ein Antihaftpolymer wie beispielsweise ein fluoriertes Polymer aufgestrichen ist, gebildet ist.

14. Anlage nach Anspruch 4, **dadurch gekennzeichnet, dass** die Mittel zum longitudinalen Zerschneiden der Platte (41) in mehrere parallele Streifen (42) aus zwei parallelen Walzen (81, 82) gebildet sind, die sich senkrecht zur Verlagerungsrichtung der Platte (41) erstrecken, wobei eine (81) der Walzen kreisförmige Schneidklingen (83), die zueinander parallel sind, umfasst.

15. Anlage nach Anspruch 4, **dadurch gekennzeichnet, dass** die Mittel zum transversalen Zerschneiden der Streifen (42) in Stücke durch Schneidklingen (85) gebildet sind, die sich senkrecht zur Verlagerungsrichtung der Streifen (42) erstrecken und durch eine horizontale Welle (86) rotatorisch angetrieben werden.
